# DEMANDE DE BREVET EUROPEEN

(11) **EP 0 704 584 A1**
(43) Date de publication de la demande: **03.04.1996**
(21) Numéro de dépôt: 94490044.8
(22) Date de dépôt: 30.09.1994
(51) Int. Cl.: E04G 21/24, A01G 13/00

(54) **Structure pour la protection des végétaux et notamment des arbres pendant la conduite de chantiers**

(71) Demandeur: Desrousseaux, Philippe, F-59600 Maubeuge (FR)
(72) Inventeur: Desrousseaux, Philippe, F-59600 Maubeuge (FR)
(74) Mandataire: Lepage, Jean-Pierre

(57) **Abrégé**

Structure pour la protection des végétaux, notamment les arbres, pendant la conduite de chantier, utilisable par les entreprises notamment de travaux publics.

Selon l'invention, elle est caractérisée par le fait qu'elle comprend :
- une première série d'éléments (7) destinés à être disposés au collet de l'arbre à proximité des racines (9), chaque premier élément étant relié à un élément adjacent par des moyens d'accrochage, l'ensemble des premiers éléments étant placé à une distance suffisante du tronc,
- une deuxième série d'éléments (8) disposés au-dessus de la première série et autour du tronc (4), chaque deuxième élément étant relié au premier élément par des moyens d'accrochage,
afin de constituer une structure porteuse (6) prenant appui sur le sol (2) et encerclant l'arbre sur plusieurs mètres de hauteur sans contact avec le tronc ni avec les racines.

Applications aux entreprises de travaux publics réalisant des chantiers dans des agglomérations ou dans des zones boisées pour protéger ou préserver un arbre de façon temporaire pendant toute l'exécution d'un chantier.

## Description

La présente invention est relative à une structure pour la protection des végétaux et notamment des arbres pendant la conduite de chantiers.

Cette structure est utilisable par des entreprises notamment des entreprises de travaux publics réalisant par exemple des chantiers dans des agglomérations ou dans des zones boisées. Elle pourra être utilisée à chaque fois qu'il faudra protéger ou préserver un arbre de façon temporaire pendant toute l'exécution d'un chantier.

Il existe aujourd'hui de plus en plus de travaux dans les agglomérations et très souvent, après les interventions des entreprises, on constate que de nombreux végétaux et notamment les arbres, ont subi des détériorations très importantes.

De moins en moins d'arbres sont préservés aujourd'hui dans les agglomérations et il est donc nécessaire de les protéger surtout lorsque des chantiers doivent intervenir.

Les entreprises de travaux publics pourront donc préalablement au démarrage du chantier protéger les arbres situés dans le périmètre du chantier, dans ses emprises ou dans ses voies d'accès.

Il est souhaitable que chaque entreprise puisse, avant le démarrage de ses activités sur le chantier, protéger les arbres, prendre des précautions pour les respecter et mettre en oeuvre une protection efficace pendant le chantier.

On a en effet constaté à de trop nombreuses reprises qu'à la suite de dégâts mécaniques sur des branches, l'écorce de l'arbre est déchirée. On constate donc la présence de blessures qui peuvent mener à un pourrissement d'une partie de l'arbre ou même du tronc. Ces blessures peuvent également constituer un vecteur de maladies et favoriser le développement des ravageurs.

Il est nécessaire de protéger le tronc et les branches constituant la charpente de l'arbre car les risques de blessures peuvent se produire jusqu'aux branches charpentières. Ainsi, il sera souhaitable d'empêcher l'installation de réseaux EDF ou PTT dans les branches et d'éloigner les feux de chantier des arbres.

On constate malheureusement que quelquefois trop souvent les arbres sont eux-mêmes utilisés comme éléments d'échafaudage sur lesquels on cloue ou on accroche des instruments. Ces agressions du tronc provoquent des plaies qui se cicatrisent très difficilement, le bois se dessèche et progressivement se nécrose. Ce processus de pourrissement s'accentue car il est accompagné de l'action d'agents pathogènes tels que des insectes ou des champignons.

Il est donc nécessaire de protéger le tronc de l'arbre et par la même les vaisseaux conducteurs de sève, partie active du bois, qui sont situés juste sous l'écorce.

Pendant toute la durée des travaux, il faut protéger le tronc pour éviter l'entassement de gravats au pied de l'arbre ou l'écoulement de liquides polluants.

On cherchera également à protéger les racines pour éviter le passage d'engins lourds à proximité des arbres et permettre l'arrosage. Cette protection des racines évitera aussi que l'on ne creuse des tranchées à une distance trop faible de l'arbre, ce qui aurait pour conséquence d'endommager les ramifications souterraines des racines.

Les systèmes de protection des arbres qui existent aujourd'hui ne sont pas particulièrement adaptés à être utilisés pendant la conduite de chantier mais sont en général plutôt posés par les pépiniéristes ou les jardiniers au moment de la plantation pour protéger les troncs. Il s'agit en général de grilles ou de barreaux espacés autour de l'arbre mais qui ne peuvent donner satisfaction en ce qui concerne la protection du tronc pendant les chantiers de travaux publics.

L'invention vise à remédier à ces inconvénients et à ces effets, un de ses premiers buts est de réaliser une structure pour la protection des végétaux qui pourra être montée et démontée rapidement au début et à la fin du chantier pour que les utilisateurs protègent le plus souvent possible les arbres situés sur un chantier.

Un autre but de la structure pour la protection des végétaux selon l'invention est de recouvrir sans les frotter ni les heurter une partie des racines et du tronc sur une hauteur de plusieurs mètres.

Un avantage de la structure pour la protection des végétaux selon l'invention est d'être réalisée à partir d'éléments assemblés entre eux de façon sensiblement étanche pour collecter vers l'extérieur les liquides polluants tels que des huiles ou de l'essence.

Un autre but de la structure pour la protection des végétaux selon l'invention est de pouvoir s'adapter à toutes les formes et dimensions des arbres.

Un autre avantage de la structure pour la protection des végétaux selon l'invention est de permettre l'arrosage de l'arbre.

Un autre but de la structure pour la protection des végétaux selon l'invention est d'être stable sans s'enfoncer dans le sol pour éviter de couper ou d'abîmer les racines situées en surface.

La structure pour la protection des végétaux notamment les arbres pendant la conduite de chantier, utilisable par les entreprises notamment de travaux publics est caractérisée par le fait qu'elle comprend :
- une première série d'éléments destinés à être disposés au collet de l'arbre à proximité des racines, chaque premier élément étant relié à un élément adjacent par des moyens d'accrochage, l'ensemble des premiers éléments étant placé à une distance suffisante du tronc,
- une deuxième série d'éléments disposés au-dessus de la première série et autour du tronc, chaque deuxième élément étant relié au premier élément par des moyens d'accrochage,
afin de constituer une structure porteuse prenant appui sur le sol et encerclant l'arbre sur plusieurs mètres de hauteur sans contact avec le tronc ni avec les racines.

L'invention sera bien comprise en se référant à la description suivante d'un mode d'exécution non limitatif, illustré par les dessins annexés parmi lesquels :
- la figure 1 représente un arbre à protéger avec une structure schématisée,
- la figure 2 schématise une partie de la structure assemblée,
- la figure 3 est une vue de dessus de la structure assemblée,
- la figure 4 est une vue de deux éléments inférieurs assemblés,
- la figure 5 est une vue d'un deuxième élément en position non montée,
- la figure 6 illustre les moyens d'accrochage de ces deuxièmes éléments.

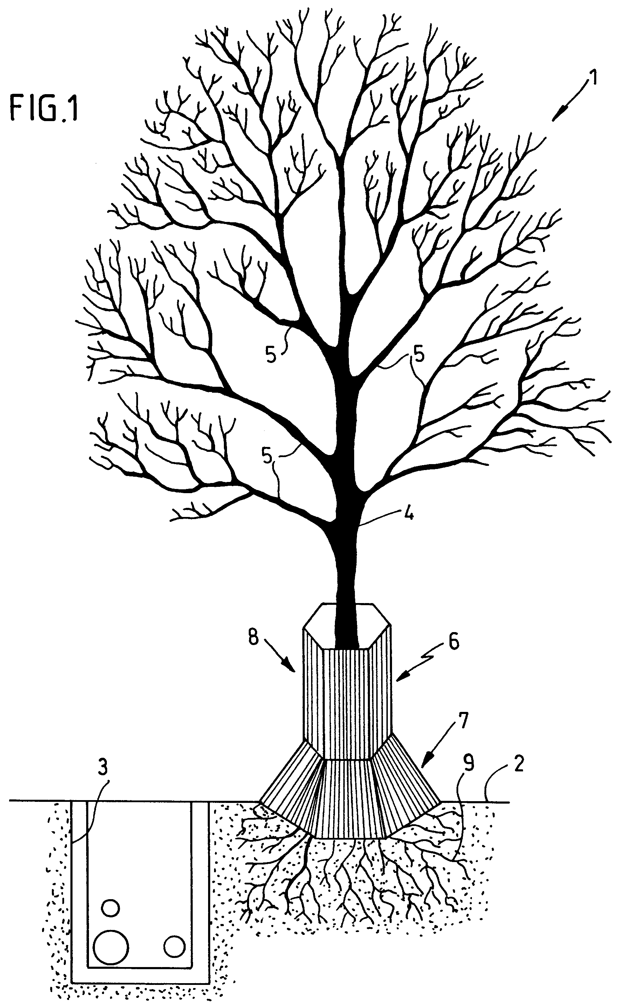

Si on se réfère à la figure 1, on voit un arbre (1) qu'il faut protéger et il se trouve sur le sol (2) d'un chantier où il faudra par exemple réaliser une tranchée (3) de grandes dimensions.

L'arbre (1) représenté qui peut être considéré comme un grand arbre comprend généralement un tronc (4), des branches charpentières (5). A titre indicatif, la hauteur de ces arbres est de l'ordre de plusieurs mètres, voire jusqu'à plus d'une dizaine de mètres

Il y a lieu de protéger le tronc (4) car toute agression endommage les vaisseaux conducteurs et interrompt la circulation de la sève. Les plaies provoquées par les coups et les chocs des engins de chantier cicatrisent très mal, se dessèchent et le processus est accentué par l'action d'agents pathogènes comme les insectes ou les champignons.

Il est donc nécessaire de protéger correctement le tronc en faisant en sorte que la structure (6) puisse constituer une bonne protection tout en étant stable, c'est-à-dire qu'elle ne devra normalement pas s'enfoncer dans le sol. En effet, tout basculement des éléments de la structure risque de venir heurter le tronc et il faudra donc dimensionner cette structure de telle façon qu'elle soit suffisamment éloignée de la base du tronc appelée collet ainsi que de l'ensemble du tronc que l'on va chercher à protéger sur plusieurs mètres de hauteur.

Compte tenu de ces dimensions importantes, on a, dans un mode d'exécution, réalisé cette structure (6) en deux parties, une partie inférieure (7) et une partie supérieure (8).

La partie inférieure est disposée à proximité du collet de l'arbre qui constitue la zone de transition entre le système racinaire (9) et le tronc (4). C'est la partie du tronc la plus fragile et il est donc important de prévoir une protection (7) qui descende jusqu'au pied de l'arbre pour éviter l'entassement de gravats.

Pour protéger les racines et le collet de l'arbre, on veillera à ce que, à l'issue des travaux, le niveau initial du sol (2) soit conservé. La tranchée (3) sera également creusée à une distance suffisante des racines (9) pour ne pas les endommager et l'on conseille en général plusieurs mètres.

Les différents éléments constituant les parties de la structure (6) seront conçus pour éviter tout frottement ou contact avec le tronc. On pourra par exemple utilement prévoir une distance d'au moins 15 à 20 centimètres minimum entre le tronc et certaines parties de la structure.

Il est également important de prévoir de ne pas sceller la base (7) dans le sol pour permettre son démontage facile et sa réutilisation.

La présente invention permet d'utiliser une structure qui peut être montée et démontée rapidement au début et à la fin de chaque chantier et ceci naturellement pour inciter les utilisateurs à mieux protéger les arbres et les protéger plus souvent.

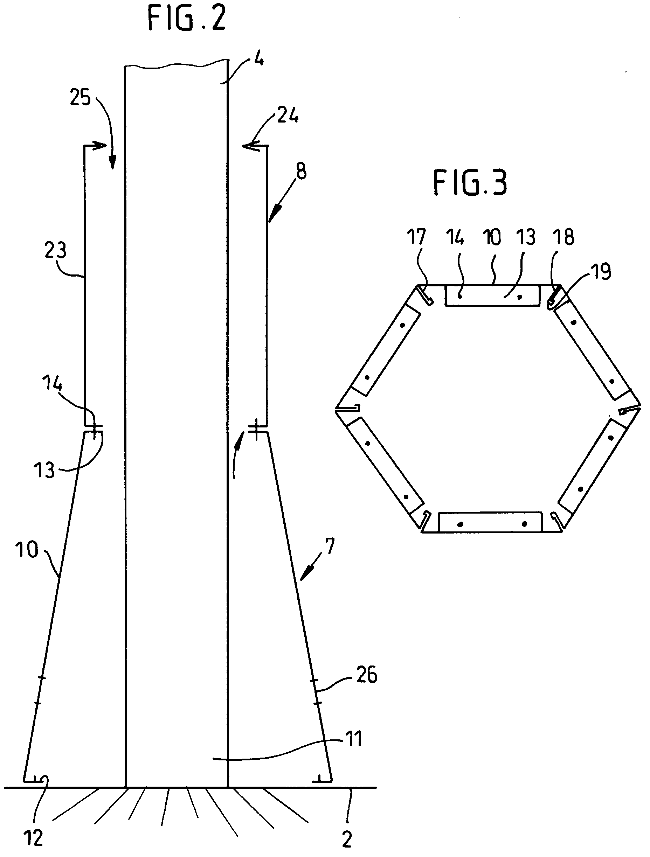

En se référant aux figures 2 et 3, on voit que la partie inférieure (7) de la structure est constituée par une série de premiers éléments (10) destinés à être disposés à proximité du collet (11) de l'arbre.

Chaque premier élément comprend une base (12) repliée vers l'intérieur qui vient en appui sur le sol (2). La partie supérieure de chaque premier élément est repliée selon une arête (13) sur laquelle sont fixés des tétons (14), par exemple au nombre de deux.

Les parois adjacentes de chaque premier élément (10) sont également repliées vers l'intérieur pour présenter d'un côté des vis à tête plate (15) et de l'autre côté des lumières (16).

Il est ainsi possible, facilement, d'assembler deux premiers éléments (10) en engageant les vis (15) dans les lumières (16) et en faisant descendre l'élément par gravité jusqu'au maintien de la vis (15) jusqu'au fond de la lumière (16).

Chaque premier élément (10) comprend d'un côté une aile (17) et de l'autre une aile (18) prolongée par une nervure (19) sur toute la hauteur de l'élément. On a ainsi réalisé un assemblage sensiblement étanche permettant notamment de collecter dans la nervure (19) les projections de produits polluants qui pourraient être lancés de l'extérieur de la structure et protéger ainsi le tronc de l'arbre.

Dans un mode d'exécution préférentiel, on a construit la partie inférieure (7) de la structure au moyen de premiers éléments (10) identiques avec une section hexagonale, telle que représentée à la figure 3. Cette forme d'hexagone est intéressante car elle permet de s'adapter à toutes les dimensions d'arbres et elle peut aussi mettre en oeuvre une distance suffisante de la structure par rapport à l'arbre pour éviter les blessures.

Cette forme hexagonale permet encore de réaliser une structure stable sur le sol. Ainsi, pour cela les premiers éléments (10) pourront avoir une forme trapézoïdale avec une grande base (12) et une petite base (13).

La forme hexagonale est réalisée au moyen de six éléments (10) qui sont identiques.

Chaque premier élément est relié à un élément adjacent par des moyens d'accrochage qui ont été décrits comme étant des vis à tête plate (15) et des lumières (16) mais il pourrait s'agir d'autres moyens d'accrochage à la portée de l'Homme de l'Art.

Lorsque l'hexagone des premiers éléments est formé autour du collet de l'arbre, on peut ensuite disposer la deuxième série d'éléments constituant la partie supérieure (8) de la structure.

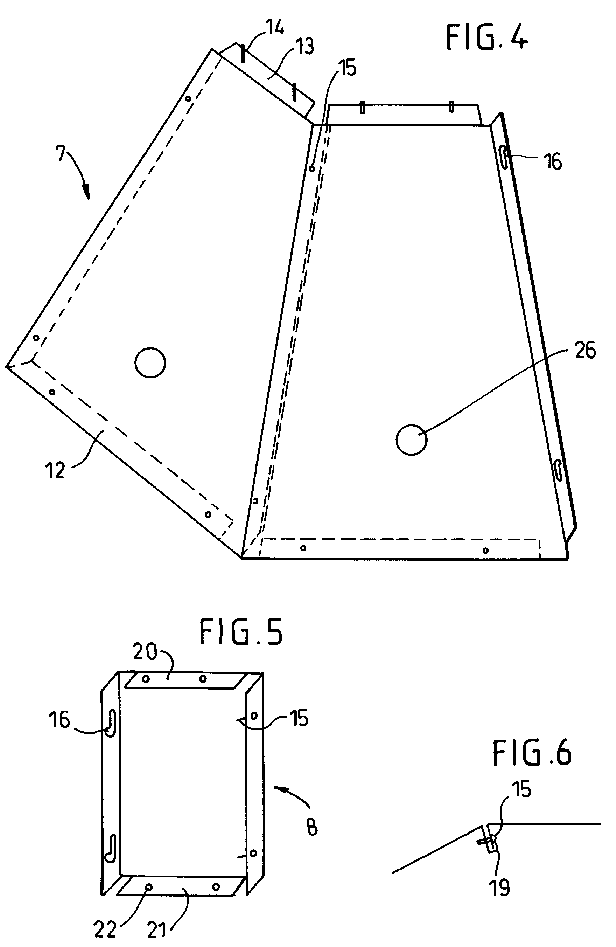

Chaque deuxième élément de forme rectangulaire, tel que représenté à la figure 5, comprend des parois latérales repliées sur lesquelles sont aménagées des vis à tête plate (15) et des lumières (16) similaires au premier élément de la figure 4.

Sur les ailes (20 et 21) on a prévu des orifices (22) de dimensions appropriées et dans lesquelles s'engageront les tétons (14).

On pourra ainsi mettre en oeuvre une deuxième série d'éléments (23) au-dessus de chaque premier élément (10).

Là encore, dans le mode d'exécution choisi, trois éléments (23) sont identiques et les trois autres sont prévus pour pouvoir positionner le dernier au moment du montage. Il y a un sens de montage des deuxièmes éléments qui s'assemblent dans le sens contraire des aiguilles d'une montre.

Le deuxième élément que l'on pose tout d'abord est celui qui présente des lumières (16) inversées par rapport à la figure 5, c'est-à-dire avec le trou oblong vers le bas.

Le deuxième élément que l'on pose en dernier ne présente pas de trou oblong mais quatre vis.

Les deuxièmes éléments qui sont placés en position deuxième, troisième et quatrième correspondent à la figure 5.

Les deuxièmes éléments qui sont placés en position première et cinquième ont la forme de la figure 5 à l'exception que les lumières (16) sont inversées pour présenter un trou oblong vers le haut.

On pourra ainsi réaliser une structure porteuse prenant appui sur le sol (2) en encerclant l'arbre dans sa partie inférieure puis également le tronc dans sa partie supérieure. Le dispositif pourra être conçu à une hauteur de plusieurs mètres, généralement entre deux à trois mètres.

On pourra également prévoir de rendre plus solide la fixation entre les premiers et deuxièmes éléments par exemple en pinçant les ailes (13) et 21) dans une barrette constituée par un U métallique, non représenté.

Un bourrelet de caoutchouc (24) pourra également protéger l'arbre dans les différentes zones où cela serait nécessaire.

Pour éviter que des détritus ne puissent être introduits par le passage (25), on pourra prévoir de placer un filet à la partie supérieure de la structure, en veillant à ce que son accrochage ne risque pas de meurtrir le tronc.

Différents aménagements pourront encore être placés sur cette structure de protection et par exemple un orifice (26) permettant l'arrosage périodique de l'arbre par l'introduction d'un tuyau. On pourra encore prévoir sur toutes les surfaces extérieures du dispositif un état de surface cannelé contre l'affichage sauvage.

On pourra adapter l'invention à différentes formes ou tailles d'arbres mais il faudra néanmoins toujours veiller à ce que le tronc soit protégé et qu'aucune partie de la structure ne puisse être approchée à moins de quinze centimètres. On veillera encore a ce que l'élément bas (7) ait un diamètre au moins égal à deux mètres pour éviter le creusement de tranchées trop près du système des racines de l'arbre. Ce dimensionnement permettra également dans certains cas de s'adapter aux grilles de protection existantes dans certaines agglomérations.

La structure pourra être réalisée en tout matériau mais par exemple de préférence en acier galvanisé prélaqué.

On pourra encore prévoir dans la structure des orifices permettant la ventilation du tronc pour éviter une trop forte augmentation de la température.

On a ainsi réalisé une structure pour la protection de végétaux utilisable momentanément par les entreprises de travaux publics pour la protection des arbres qui pourra être montée et démontée facilement, cette conception est donc une incitation pour les utilisateurs à une meilleure protection des végétaux

Naturellement, d'autres mises en oeuvre de la présente invention, à la portée de l'Homme de l'Art, auraient également pu être envisagées sans pour autant sortir du cadre de celle-ci.

## Revendications

1. Structure pour la protection des végétaux, notamment les arbres, pendant la conduite de chantier, utilisable par les entreprises notamment de travaux publics, caractérisée par le fait qu'elle comprend :
- une première série d'éléments (7) destinés à être disposés au collet (11) de l'arbre à proximité des racines (9), chaque premier élément (7) étant relié à un élément adjacent par des moyens d'accrochage (15, 16), l'ensemble des premiers éléments étant placé à une distance suffisante du tronc,
- une deuxième série d'éléments (8) disposés au-dessus de la première série et autour du tronc, chaque deuxième élément étant relié au premier élément par des moyens d'accrochage (13, 14),
afin de constituer une structure porteuse prenant appui sur le sol et encerclant l'arbre sur plusieurs mètres de hauteur sans contact avec le tronc ni avec les racines.

2. Structure pour la protection des végétaux, notamment des arbres, pendant la conduite de chantier, selon la revendication 1, caractérisée par le fait que les premiers éléments sont identiques.

3. Structure pour la protection des végétaux, notamment des arbres, pendant la conduite de chantier, selon la revendication 1, caractérisée par le fait que les premiers éléments (7) sont au nombre de six et que la structure a une forme hexagonale.

4. Structure pour la protection des végétaux, notamment des arbres, pendant la conduite de chantier, selon la revendication 1, caractérisée par le fait que les deuxièmes éléments (8) sont au nombre de six.

5. Structure pour la protection des végétaux, notamment des arbres, pendant la conduite de chantier, selon la revendication 1, caractérisée par le fait que la base des premiers éléments (7) comprend un rebord (12) servant de pied et d'appui sur le sol.

6. Structure pour la protection des végétaux, notamment des arbres, pendant la conduite de chantier, selon la revendication 1, caractérisée par le fait qu'elle présente un filet au sommet des deuxièmes éléments pour éviter l'accumulation de déchets à l'intérieur de la structure.

7. Structure pour la protection des végétaux, notamment des arbres, pendant la conduite de chantier, selon la revendication 1, caractérisée par le fait que des orifices (26) sont prévus pour faciliter l'arrosage.

8. Structure pour la protection des végétaux, notamment des arbres, pendant la conduite de chantier, selon la revendication 1, caractérisée par le fait que les premiers éléments sont reliés de façon jointive et étanche pour faire obstacle à l'introduction des liquides polluants dans la structure de l'extérieur vers l'intérieur.

9. Structure pour la protection des végétaux, notamment des arbres, pendant la conduite de chantier, selon la revendication 1, caractérisée par le fait que la première série d'éléments comprend une rigole de récupération.

10. Structure pour la protection des végétaux, notamment des arbres, pendant la conduite de chantier, selon la revendication 1, caractérisée par le fait que l'on dispose des boudins de caoutchouc (24) sur les parties agressives de la structure afin d'éviter des blessures sur le tronc.
